# EUROPÄISCHE PATENTSCHRIFT

(11) **EP 3 043 197 B1**
(45) Veröffentlichungstag und Bekanntmachung des Hinweises auf die Patenterteilung: **18.04.2018**
(21) Anmeldenummer: 15201488.2
(22) Anmeldetag: 21.12.2015
(51) Int. Cl.: G02B 6/42, G02B 7/00, G01M 11/04, G02B 6/36

(54) **TRÄGERSYSTEM FÜR FUNKTIONSELEMENTE DER MIKROTECHNIK**
SUPPORT SYSTEM FOR MICROTECHNOLOGY FUNCTIONAL ELEMENTS
SYSTEME SUPPORT POUR ELEMENTS FONCTIONNELS DE LA MICRO-TECHNIQUE

(30) Priorität: 08.01.2015 DE 102015200123
(43) Veröffentlichungstag der Anmeldung: 13.07.2016
(73) Patentinhaber: Fraunhofer-Gesellschaft zur Förderung der angewandten Forschung e.V., 80686 München (DE); Technische Universität Berlin, 10623 Berlin (DE)
(72) Erfinder: Schröder, Henning, 12621 Berlin (DE); Arndt-Staufenbiel, Norbert, 10245 Berlin (DE); Marx, Sebastian, 10365 Berlin (DE); Böttger, Gunnar, 10437 Berlin (DE)
(74) Vertreter: Gagel, Roland

(56) Entgegenhaltungen:
- WO-A1-2005/039259
- WO-A1-2012/085311
- DE-B4- 19 780 124

## Beschreibung

### Technisches Anwendungsgebiet

Die vorliegende Erfindung betrifft ein Trägersystem für mikrooptische und/oder andere Funktionselemente der Mikrotechnik, das eine Grundplatte und ein oder mehrere Halteelemente für die Funktionselemente aufweist, die auf der Grundplatte fixiert sind.

Werden insbesondere optoelektronische Bauelemente wie bspw. Halbleiterlaser, Photodioden oder Modulatoren mit mikrooptischen Bauelementen wie bspw. Mikrolinsen, Gittern und Prismen sowie beispielsweise Verbindungselementen wie optischen Fasern auf einer Plattform hybrid aufgebaut, so wird dies als mikrooptische Bank bezeichnet. Wie bei einer makroskopischen optischen Bank sind für diese zu justierenden Funktionselemente spezielle Halteelemente notwendig, mit denen bspw. unterschiedliche Höhen kompensiert oder Winkeleinstellungen realisiert werden können, oder die als Justagehilfe für die Funktionselemente dienen.

### Stand der Technik

Derartige Trägersysteme wurden bisher mit verschiedensten Materialien und Techniken realisiert. Die bisher bekannten Lösungen sind jedoch stets sehr anwendungsbezogen und speziell und lassen sich damit auch nicht universell einsetzen oder in einfacher Weise auf andere Anwendungen übertragen. Zu unterscheiden sind hierbei die folgenden Techniken.

Bei einer bekannten Technik werden gestufte, terrassierte oder anderweitig strukturierte Grundplatten aus einem Materialblock durch urformende, abformende oder abtragende Techniken aus einem Material hergestellt. Eine derartige Grundplatte zeigt bspw. die Veröffentlichung von S. Heinemann et al., "Compact High Brightness Diode Laser Emitting 500 W from a 100 µm Fiber", in: High-Power Diode Laser Technology and Applications XI, Proc. SPIE Vol. 8605, 2013, Seiten 86050Q-1 bis 86050Q-7 oder die DE 19780124 B4. Durch derartige gestufte Strukturen in der Grundplatte können unterschiedliche Bauhöhen der eingesetzten Funktionselemente realisiert werden.

Bei einer weiteren Technik werden auf einer planaren Grundplatte aus Silizium, Glas, Metall oder Keramik metallische V-Nuten, Ösen, Winkel, Podeste und Justageelemente mit verschiedenen Bondtechniken fixiert. Eine derartige Technik ist bspw. aus www.ingeneric.com/pdf/V-STEP-MODULE_INGENERIC.pdf bekannt.

Eine weitere Technik nutzt aufwendig lithographisch prozessierte MEMS Strukturen aus z. B. SU8, Silizium oder Keramik auf Substraten aus Silizium, Glas, Metall oder Keramik. Weiterhin sind Techniken bekannt, bei denen Trägerstrukturen durch Ultrapräzisionsfräsen in Substraten aus Silizium, Glas, Metall oder Keramik erzeugt werden.

Die EP 0864893 A3 zeigt ein modulares Fügesystem für faseroptische Aufbauten, bei dem unterschiedliche Bauteile geeignet strukturiert und anschließend zusammengesetzt werden, um mechanische Anschläge und Führungen für eine Positionierung von optischen Fasern bereitzustellen.

Die DE 10347450 A1 beschreibt eine Optik-Fassungsvorrichtung, die aus mehreren übereinander gestapelten Einzellagen einer Keramik oder Glaskeramik aufgebaut ist. Die Einzellagen sind durch Bildung von Öffnungen so strukturiert, dass eine integrierte räumliche Struktur zur Fassung eines optischen Bauelementes entsteht.

Die DE 202014104204 U1 offenbart einen Optikgrundkörper für ein Spektrometer zur Halterung von weiteren Bauteilen des Spektrometers, der in Schichtbauweise aus wenigstens drei übereinander geschichteten und miteinander verbundenen flachen Elementen gefertigt ist.

Aus der WO 2005/039259 A1 ist ein System zur Halterung von mikrooptischen Elementen mit Glasplatten bekannt, wobei die Glasplatten eine Dicke von weniger als 1mm aufweisen. Vor allem für den Aufbau mikrooptischer Bänke ist Glas aufgrund seiner Dimensionsstabilität und Zuverlässigkeit ein hervorragend geeignetes Material. Allerdings ist die Herstellung von Halteelementen aus Glas in der für mikrooptische und/oder andere mikrotechnische Funktionselemente erforderlichen kleinen Größe im Bereich von einigen µm bis zu einigen mm und speziellen für die Haltefunktion erforderlichen Formen mit Mitteln der Mikrosystemtechnik bisher nicht möglich. Techniken wie 3D-Drucken und anschließenden Sinterprozessen oder Glasätzprozesse liefern nicht die für viele Anwendungen erforderliche Genauigkeit. Auf der anderen Seite sind die Funktionselemente oft und insbesondere bei kostengünstigen Produkten nicht präzise genug gefertigt und müssen in bis zu sechs Freiheitsgraden hochgenau und definiert justiert werden. Die auf dem Trägersystem eingesetzten Halteelemente müssen eine derartige Justierung erlauben, bspw. für eine Strahlpositionierung, für die Justage innerhalb einer Baugruppe oder für eine hochgenaue Fixierung durch Minimierung von Klebespalten. Bisher fehlt eine Technik mit entsprechend hoher Präzision und Flexibilität, die sich unaufwändig an viele Anwendungen anpassen lässt.

Die Aufgabe der vorliegenden Erfindung besteht darin, ein Trägersystem für mikrooptische und/oder andere Funktionselemente der Mikrotechnik anzugeben, das auch auf Basis von Glas oder Glaskeramik mit hoher Genauigkeit realisiert werden kann und sich ohne weiteres an unterschiedlichste Anwendungen anpassen lässt.

### Darstellung der Erfindung

Die Aufgabe wird mit dem Trägersystem gemäß Patentanspruch 1 gelöst. Vorteilhafte Ausgestaltungen des Trägersystems sind Gegenstand der abhängigen Patentansprüche oder lassen sich der nachfolgenden Beschreibung sowie den Ausführungsbeispielen entnehmen.

Das vorgeschlagene Trägersystem für mikrooptische und/oder andere Funktionselemente der Mikrotechnik weist eine Grundplatte und ein oder mehrere Halteelemente für die Funktionselemente auf, wobei die Halteelemente als erhabene Strukturen auf der Grundplatte fixiert sind. Unter der Mikrotechnik wird hierbei ein technischer Bereich verstanden, in dem zumindest einige der beteiligten Funktionselemente in wenigstens einer Dimension Abmessungen von ≤ 1mm aufweisen. Beispiele sind die Gebiete der Mikromechanik, der Mikroelektronik, der Mikrooptik oder der Mikrofluidik. Funktionselemente sind Komponenten aus diesen Bereichen, die eine entsprechende optische, elektronische, mechanische oder fluidische Funktion erfüllen. Die Halteelemente bei dem vorgeschlagenen Trägersystem können jedoch grundsätzlich auch Funktionselemente tragen, deren kleinste Dimension bereits mehrere mm beträgt, wie bspw. entsprechend dickere optische Fasern. Bei dem vorgeschlagenen Trägersystem sind die Halteelemente teilweise oder vollständig aus dünnen gestapelten Platten aufgebaut, die eine Plattendicke von typisch weniger als 1 mm aufweisen.

Diese dünnen Platten können durch Verbindungselemente klebefrei oder auch durch verschiedenste Bondtechniken miteinander verbunden sein. Bei klebefreien Verbindungen können die Verbindungselemente bspw. Stiftelemente aus Metall sein, die zu einer Klemmfixierung führen, wenn duktiles Material kalt verarbeitet wird. Die Verbindungselemente können auch bspw. Klammern, Rahmen oder Profile sein. Bei einer Verbindung mittels einer Bondtechnik können Klebeverfahren oder - bei Glasmaterialien - Glas-Glas-Bonden zur Verbindung der dünnen Platten verwendet werden. Die dünnen Platten müssen bei der Bildung der Halteelemente nicht unbedingt innig aufeinanderliegen, sondern können insbesondere bei einer Verbindung über Verbindungselemente auch einen Abstand zueinander haben.

Durch den Aufbau der Halteelemente aus dünnen gestapelten Platten können die Halteelemente je nach Anwendung in unterschiedlichsten Dimensionen und Formen realisiert werden. Gerade bei Glas- oder Glaskeramikmaterialien lassen sich dünne Platten im Gegensatz zu massiven Materialblöcken sehr einfach und mit hoher Genauigkeit strukturieren. Die Platten werden dann zueinander justiert und gegenseitig entsprechend fixiert, um das Halteelement zu bilden. Durch Nutzung von Platten unterschiedlicher lateraler Dimensionen (Länge/Breite) bzw. äußeren Formen und/oder unterschiedlicher Strukturierung können damit Halteelemente mit den unterschiedlichsten geometrischen Formen, auch bspw. mit Hinterschneidungen, sowie entsprechenden Strukturen realisiert werden. Unter der Strukturierung der Platten wird hierbei die Erzeugung von Durchgangsöffnungen in beliebiger geometrischer Form in den Platten oder die entsprechende Formung des Umrisses bzw. der Ränder der Platten verstanden. Derartige Strukturierungen dünner Platten lassen sich mit einfachen Schneidtechniken, insbesondere mittels Laserschneiden, bspw. mit einem grünen Laser oder einem CO₂-Laser, mittels Wasserstrahlschneiden oder mittels Ätztechniken durchführen. Vorzugsweise weisen die dünnen Platten der Halteelemente laterale Dimensionen auf, von denen wenigstens eine, d.h. die Länge oder die Breite, kleiner als 50% der Länge oder der Breite der Grundplatte ist.

Die dünnen Platten der Halteelemente bestehen beim vorgeschlagenen Trägersystem vorzugsweise aus einem Glas oder einer Glaskeramik, da diese Materialien aufgrund ihrer Dimensionsstabilität und Zuverlässigkeit besonders für mikrooptische und andere mikrotechnische Anwendungen geeignet sind. Unterschiedliche Platten können dabei auch aus unterschiedlichen Gläsern oder Glaskeramiken bestehen. Dünne Platten aus Glas sind kommerziell als sog. Dünnglasplatten verfügbar und lassen sich mit den obigen Schneidtechniken sehr genau lateral dimensionieren und auch strukturieren.

Vorzugsweise besteht auch die Grundplatte des Trägersystems aus einem Glas oder einer Glaskeramik, da diese Materialien zusätzlich auch eine sehr plane Oberfläche bieten. Die Grundplatte kann dabei massiv aus dem Glas- oder Glaskeramikmaterial bestehen, ist jedoch vorzugsweise ebenfalls aus mehreren dünnen gestapelten Platten aufgebaut, die eine Plattendicke von typisch weniger als 1 mm aufweisen. Diese dünnen Platten können zur Bildung der Grundplatte bspw. metallisch beschichtet sein, um z.B. eine thermische Funktion zu erfüllen, und durch eine Bondtechnik miteinander verbunden sein.

Durch den Aufbau der Grundplatte aus mehreren dünnen gestapelten Platten können wiederum viele unterschiedliche Strukturen auf einfache Weise und mit hoher Genauigkeit in der Grundplatte realisiert werden. Die Grundplatte kann dabei Löcher enthalten, metallische Anschlüsse, wie bspw. Bumbs zur Justage, thermische Vias oder elektrische Zuleitungen, Verbindungsschnittstellen für Zuleitungen, wie bspw. lösbare Vakuumanschlüsse oder fluidische Anschlüsse, sowie auch horizontale Röhren für bspw. fluidische Medien, Gase oder Vakuum. Lösbare Vakuumanschlüsse können für vakuumunterstützte Aufbauprozesse bei der Fixierung der Halteelemente oder für die Funktionalität im Betrieb erforderlich sein. Bei den fluidischen Anschlüssen kann es sich um lösbare oder unlösbare fluidische Anschlüsse handeln.

Die Halteelemente können beim vorgeschlagenen Trägersystem so aufgebaut und mit der Grundplatte verbunden sein, dass die dünnen Platten der Halteelemente bezüglich der Oberfläche der Grundplatte horizontal gestapelt sind. Die horizontale Stapeltechnik ermöglicht die Realisierung von Stufen oder auch von Durchgangsröhren zur Aufnahme von Steckpins bzw. Pass-Stiften, oder auch thermische, fluidische Durchleitung und andere Zwecke in den Halteelementen.

Die Halteelemente oder zumindest ein Teil der Halteelemente können jedoch auch so ausgebildet und an der Grundplatte fixiert sein, dass die dünnen Platten der Halteelemente bezüglich der Oberfläche der Grundplatte vertikal gestapelt sind. Durch die vertikale Stapelung kann die Aufnahme von Funktionselementen entweder durch form- und/oder kraftschlüssige Klemmung der Funktionselemente zwischen einzelnen Platten der Halteelemente erfolgen, bspw. von optischen Filtern, Gittern oder Spiegeln, oder durch Löcher, in die entsprechend geformte Funktionselemente gesteckt werden können, wie z.B. optische Fasern. Weiterhin ermöglicht die vertikale Stapeltechnik eine Aufnahme der Funktionselemente durch eine auf der Oberseite des Halteelementes, d.h. an den Rändern der Platten, gebildete Kavität oder Rippenhalterung. Die Funktionselemente können dabei bspw. durch Klebung an den Halteelementen fixiert werden. Dies betrifft insbesondere mechanische Funktionselemente oder optische Funktionselemente, wie bspw. Stab- und Kugellinsen, andere Linsen, Gitter, Prismen usw. Die vertikale Stapelung ermöglicht weiterhin die Aufnahme von Rotationsachsen, auf die wiederum andere Strukturen gesteckt sein können. Auf diese Weise bleiben Rotationsfreiheitsgrade für die aufgenommenen Elemente erhalten, insbesondere auch zur Realisierung von kardanischen Aufhängungen, Scharnieren oder Torsionselementen. Die Halteelemente können prinzipiell auch planare Grundflächen mit speziellen konkaven Strukturen bzw. Reservoiren zur Verklebung enthalten oder Haltestrukturen, die durch spezielle äußere Formgebung einem universellen Greifertool in einem Assemblierungsautomaten angepasst sind. Weiterhin kann durch Schlitzung einzelner Platten die Integration von Röhren oder Kanälen erreicht werden, die eine Vakuumanbindung über die Grundplatte ermöglichen.

Auch Halteelemente sind möglich, bei denen die Platten des Stapels weder genau horizontal oder vertikal sondern schräg zur Grundplatte orientiert sind, so wie auch eine Kombination horizontaler und vertikaler Stapelungen dünner Platten zum Aufbau komlexerer Halteelemente realisiert werden kann, beispielsweise in gekreuzter oder verschränkter Anordnung.

Die Halteelemente können neben den dünnen gestapelten Platten und ggf. Verbindungselementen auch noch weitere Bestandteile enthalten, bspw. einen Sockel oder auch einen geeigneten Aufsatz, bspw. aus anisotrop oder isotrop strukturierten Siliziumplatten, um zum Beispiel einfach definierte Neigungen realisieren zu können.

Durch die Möglichkeit der freien (lateralen) Dimensionierung und Strukturierung der dünnen Platten mit hoher Genauigkeit, die dann zu den entsprechenden Halteelementen zusammengesetzt werden, wird ein universeller methodischer Ansatz bereitgestellt, um beliebig diskret geformte und/oder strukturierte Halteelemente mit entsprechend kleinen Dimensionen in dem Trägersystem zu realisieren. Gerade bei Nutzung der vorteilhaften Glas- oder Glaskeramikmaterialien lassen sich die vorgeschlagenen Halteelemente und Aufbautechniken für die industrielle Fertigung von Kleinserien bis hin zu einer massenhaften Fertigung unter Ausnutzung der guten Automatisierbarkeit der Herstellungs- und Aufbauschritte einsetzen. So stehen Dünnglasplatten in großen lateralen Formaten, bspw. im A4- oder im A3-Format zur Verfügung. Damit können die dünnen Platten oder auch die gesamten Halteelemente durch Nutzenfertigung hergestellt werden. Eine Möglichkeit besteht darin, jeweils mehrere der dünnen Platten in einer großformatigen Dünnglasplatte nebeneinander zu strukturieren und auszuschneiden und anschließend mit in gleicher Weise erzeugten dünnen Platten aus der gleichen oder aus anderen Dünnglasplatten justiert übereinander zu stapeln und miteinander zu verbinden. Dies ermöglicht eine effiziente Fertigung in Fällen, in denen es günstiger ist, viele Einzelplatten zu fertigen und nachträglich zu stapeln oder in Fällen, in denen eine Kombination mit Platten aus anderen Materialien erfolgen soll. Weiterhin besteht die Möglichkeit, die großformatigen Dünnglasplatten zunächst übereinander zu stapeln und miteinander zu verbinden und dann den gesamten Stapel mit einer Schneidetechnik, bspw. mittels Laserschneiden mit einem grünen Laser, auszuschneiden und ggf. zu strukturieren. Selbstverständlich ist grundsätzlich auch eine Einzelfertigung der einzelnen dünnen Platten und Halteelemente möglich.

Für die gegenseitige Fixierung der dünnen Platten stehen unterschiedliche Möglichkeiten zur Verfügung, bspw. eine Verstiftung durch Aufstecken auf Führungsstifte oder Bondtechniken. Bei den Bondtechniken können Verfahren mit Zusatzstoffen - spaltüberbrückend - eingesetzt werden, bspw. Kleben, Löten oder silikatisches Bonden. Es können auch Bondtechniken ohne Zusatzstoffe - spaltfrei - genutzt werden, bspw. Ansprengen, direktes Bonden (Glas-Glas-Bonden) oder Laserbonden.

Das vorgeschlagene Trägersystem eignet sich besonders für den Einsatz von Gläsern oder Glaskeramiken als Materialien für die dünnen gestapelten Platten. Prinzipiell lässt sich die vorgeschlagene Technik jedoch auch auf andere Materialien übertragen, bspw. Materialien aus Kunststoff oder Keramik, für die dann viele der vorgenannten Vorteile in gleicher Weise gelten. Sowohl die Grundplatte als auch die Halteelemente können prinzipiell auch aus dünnen Platten unterschiedlicher Materialien zusammengesetzt sein.

Das vorgeschlagene Trägersystem ermöglicht besonders die Umsetzung einer hochgenauen wirtschaftlichen Großformatlayout-Technologie zur Herstellung einer Mehrlagen-AVT (AVT: Aufbau- und Verbindungstechnik) aus Glas mit anschließender Nutzentrennung. Damit lassen sich 2,5D mikrooptische Bänke, funktionalisierte Substrate (mechanisch, optisch, fluidisch, elektrisch, thermisch-leitend) oder auch modulare MST (MST: Mikrosystemtechnik) realisieren. Das erfindungsgemäße Konzept für den Aufbau des Trägersystems ermöglicht eine heterogene Systemintegration verschiedener Funktionselemente, bspw. die Herstellung von mikrooptischen Bänken zur dynamischen hochgenauen Positionierung in sechs Freiheitsgraden mit anschließender zuverlässiger Fixierung oder komplexe mikrooptische Systeme auf hochplanaren Substraten. Das vorgeschlagene Trägersystem ermöglicht dabei bspw. eine Anpassung des thermischen Ausdehnungskoeffizienten. Weiterhin ermöglicht das Trägersystem eine Kostenreduktion bei der Herstellung durch Nutzung kommerziell verfügbarer wärmepolierter Float- bzw. gezogener Glasscheiben bzw. Folien (draw-down-Verfahren) mit naturgemäß sehr geringen Dickentoleranzen und hoher Ebenheit. Daraus folgt, dass keine weiteren kostenintensiven Politurschritte, wie bspw. bei Metall-Substraten nötig sind. Bei der Realisierung des Trägersystems ist auch eine vollautomatische Bestückung möglich. Durch Nutzung von optisch transparenten Glasmaterialien entstehen keine Abschattungen bei Realisierung von UV-Klebungen oder Laserlöten zur Verbindung einzelner Platten oder Komponenten.

Die Platten, aus denen die Halteelemente und/oder die Grundplatte aufgebaut sind, müssen nicht in jedem Falle planparallel sein. So ist bspw. auch eine Keilform möglich, so dass bspw. die Halteelemente dann aus keilförmigen Platten aufgebaut sein können. Weiterhin kann das Trägersystem auch noch weitere Halteelemente umfassen, die nicht aus gestapelten dünnen Platten aufgebaut sind. Das vorgeschlagene Trägersystem lässt sich in zahlreichen elektronischen, optischen, mechanischen, fluidischen und kombinierten Anwendungen einsetzen. Beispiele sind Lasermodule für die Telekommunikation, die optische Messtechnik oder die Lasermaterialbearbeitung, Sensorsysteme mit zueinander justierter Mikrooptik, Bioanalytik-Messsysteme, Messzellen für die Mikroreaktionstechnik, Brennstoffzellen, optische Messzellen für die chemische Analytik, Mikroprojektionsmodule, Beleuchtungselemente, hoch form- und temperaturstabile mikrooptische Systeme für die Messtechnik wie z.B. Interferometer, funktionalisierte Vakuumdurchführungen, freistrahloptische Kommunikationstechnik (terrestrisch, Raumfahrt), Minispektrometer, optische Designelemente sowie MEMS-Systeme mit transparenter und funktionalisierter Verkapselung. Dies ist selbstverständlich keine abschließende Aufzählung.

### Kurze Beschreibung der Zeichnungen

Das vorgeschlagene Trägersystem wird nachfolgend in Verbindung mit den Zeichnungen anhand von Ausführungsbeispielen nochmals näher erläutert. Hierbei zeigen:
- Fig. 1: ein vereinfachtes Beispiel einer Ausgestaltung der vorgeschlagenen Trägerstruktur mit Grundplatte und einem Halteelement;
- Fig. 2: ein Beispiel für ein Halteelement, bei dem die dünnen Platten durch Stifte verbunden und voneinander beabstandet sind;
- Fig. 3: zwei Beispiele für ein vertikal gestapeltes Halteelement mit einem darauf positionierten Funktionselement;
- Fig. 4: ein Beispiel für ein Halteelement mit einer Rotationsachse; und
- Fig. 5: ein Beispiel für ein horizontal gestapeltes Halteelement.

### Wege zur Ausführung der Erfindung

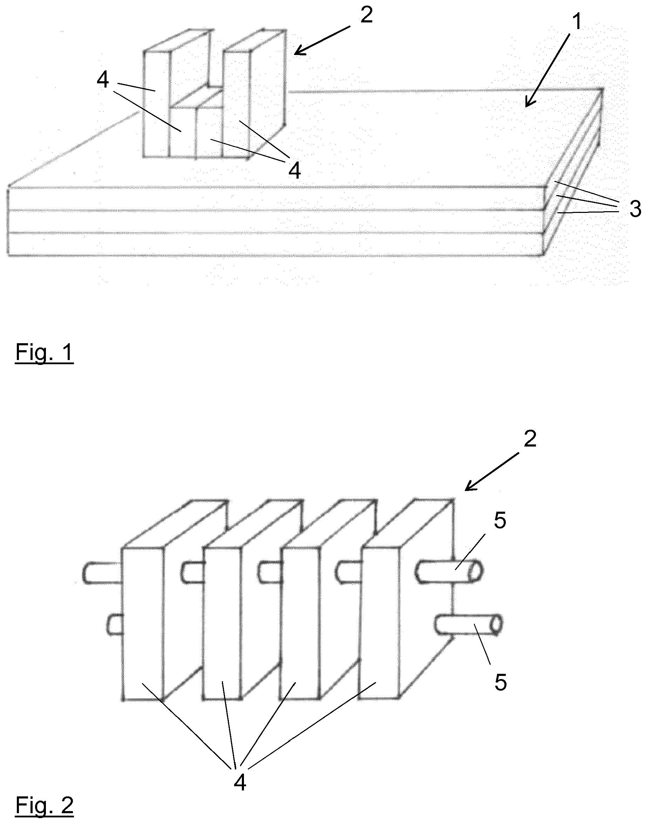

Das vorgeschlagene Trägersystem weist eine Grundplatte sowie ein oder mehrere Halteelemente für die Funktionselemente auf. Wenigstens einige der Halteelemente sind dabei aus mehreren dünnen gestapelten Platten aufgebaut. Figur 1 zeigt hierzu in vereinfachter Darstellung ein Beispiel für ein derartiges Trägersystem, das in diesem Beispiel lediglich die Grundplatte 1 mit einem darauf fixierten Halteelement 2 umfasst. In diesem Beispiel ist auch die Grundplatte 1 aus mehreren gestapelten dünnen Platten 3 aufgebaut, wie in der Figur zu erkennen ist. Das Halteelement 2 ist in diesem Beispiel aus vertikal gestapelten dünnen Platten 4 gebildet, von denen die beiden äußeren Platten höher als die beiden inneren Platten sind. Die Befestigung der Platten 4 aneinander kann bei Nutzung von Glasplatten bspw. durch Glas-Glas-Bonden erfolgen. Das Halteelement 2 kann bspw. durch eine Klebetechnik auf der Grundplatte 1 befestigt sein. In der Regel werden bei den meisten Anwendungen mehrere in gleicher Weise oder unterschiedlich aufgebaute Halteelemente 2 auf der Grundplatte 3 fixiert sein. Das Halteelement 2 kann in der hier gezeigten Form ein Funktionselement aufnehmen, das bei entsprechender Form bzw. Dimension zwischen die beiden äußeren dünnen Platten 4 geklemmt werden kann.

Die dünnen Platten 4 eines Halteelementes 2 müssen nicht zwangsläufig Kontakt zueinander haben. Sie können auch einen Abstand zueinander aufweisen, wie dies im Beispiel der Figur 2 dargestellt ist. Figur 2 zeigt hierzu ein Halteelement 2, bei dem die dünnen Platten 4 über Stifte 5 zum Halteelement 2 zusammengesetzt sind. Die einzelnen Platten 4 wurden hierbei durch Bildung von Durchgangsöffnungen strukturiert, durch die die Stifte 5, bspw. aus Metall, gesteckt werden können. Die gegenseitige Fixierung kann hierbei durch Form- oder Kraftschluss erfolgen.

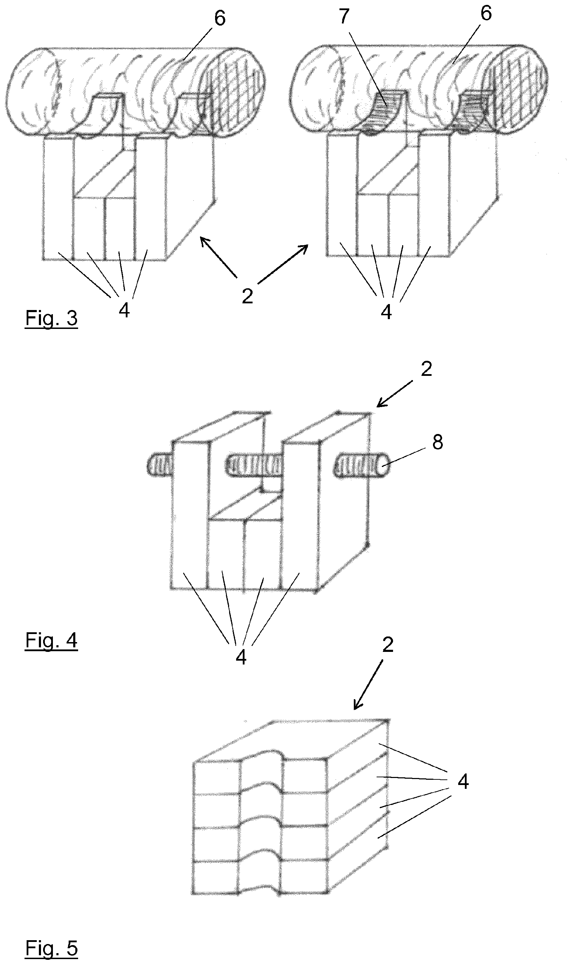

Figur 3 zeigt ein weiteres Beispiel für eine mögliche Ausgestaltung eines Halteelementes 2 zur Aufnahme von Funktionselementen. In diesem Beispiel weisen die oberen Ränder der beiden äußeren dünnen Platten 4 des Halteelementes 2 durch vorangegangene Strukturierung, bspw. durch Ausschneiden einer dünnen Platte mit einer derartigen äußeren Form, Kavitäten auf, die zur Aufnahme des in diesem Falle zylinderförmigen Funktionselementes 6 dimensioniert sind. Das Funktionselement 6, bspw. eine optische Faser, kann hierbei entweder nur in die bogenförmigen Vertiefungen am Rand der äußeren Platten 4 eingelegt (linker Teil der Figur) oder auch in diesen Vertiefungen gebondet werden, wie im rechten Teil der Figur durch die Verklebung 7 angedeutet. Die Form der Vertiefung am Rand der Platten 4 kann dabei exakt an die äußere Form des aufzunehmenden Funktionselementes 6 angepasst werden.

Figur 4 zeigt ein weiteres Beispiel eines vertikal gestapelten Halteelementes 2, bei dem in die äußeren Platten 4 kreisförmige Durchgangsöffnungen strukturiert wurden. Diese Durchgangsöffnungen können bspw. eine Achse 8 aufnehmen, die als Rotationsachse für ein an dieser Achse befestigtes Funktionselement dienen können. Diese Rotationsachse kann in den dargestellten Öffnungen entweder drehbar gelagert oder starr fixiert sein. Weiterhin kann ein Halteelement 2 mit derartigen Durchgangsöffnungen zur Aufnahme eines entsprechend ausgestalteten Funktionselementes verwendet werden. Beispielsweise kann anstelle der Achse 8 auch eine optische Faser als Funktionselement durch die Durchgangsöffnungen gesteckt werden. In diesem Falle dient das Halteelement 2 zur Aufnahme bzw. Führung der optischen Faser.

Figur 5 zeigt schließlich noch ein Beispiel für ein horizontal gestapeltes Halteelement 2. In diesem Beispiel sind alle dünnen Platten 4 des Halteelementes 2 identisch dimensioniert und weisen auf einer Seite eine entsprechende Vertiefung am Rand auf, die in Zusammenwirkung aller Platten als kanalförmige Vertiefung realisiert ist. Diese Vertiefung könnte wiederum ein Funktionselement mit entsprechender Form aufnehmen, das in dieser Vertiefung gelagert und darin ggf. auch verklebt werden könnte.

Die dargestellten Ausführungsbeispiele deuten lediglich unterschiedliche einfache Ausgestaltungen des Trägersystems bzw. der Halteelemente an. Selbstverständlich lassen sich die Halteelemente auch deutlich komplexer realisieren und können insbesondere auch mehr als drei bzw. vier dünne Platten umfassen. Jede Platte wird dabei entsprechend der gewünschten Endform des Halteelementes lateral dimensioniert bzw. geformt. Da das Ausschneiden bzw. die Strukturierung derart dünner Platten sehr einfach und mit hoher Genauigkeit erfolgen kann, lassen sich auf diese Weise mit geringem Aufwand sehr komplexe Formen der Halteelemente realisieren. Dies gilt insbesondere für Halteelemente aus Glas oder Glaskeramiken.

### Bezugszeichenliste

- 1: Grundplatte
- 2: Halteelement
- 3: dünne Platten der Grundplatte
- 4: dünnen Platten der Halteelemente
- 5: Stifte
- 6: Funktionselement
- 7: Verklebung
- 8: Achse

## Patentansprüche

1. Trägersystem für Funktionselemente (6) der Mikrotechnik, das eine Grundplatte (1) und ein oder mehrere auf der Grundplatte (1) fixierte Halteelemente (2) für die Funktionselemente (6) aufweist, wobei die Halteelemente (2) teilweise oder vollständig aus dünnen gestapelten Platten (4) aufgebaut sind, die eine Plattendicke von weniger als 1 mm aufweisen, und die dünnen Platten der Halteelemente laterale Dimensionen aufweisen, von denen wenigstens eine, nämlich die Länge oder die Breite, kleiner als 50% der Länge oder der Breite der Grundplatte ist,
**dadurch gekennzeichnet, dass** die Haltelemente Haltestrukturen aufweisen, die durch äußere Formgebung einem universellen Greifertool in einem Assemblierungsautomaten angepasst sind, und dass die Grundplatte Verbindungsschnittstellen für Zuleitungen in Form von lösbaren Vakuumanschlüssen für vakuumunterstützte Aufbauprozesse bei der Fixierung der Halteelemente aufweist.

2. Trägersystem nach Anspruch 1,
**dadurch gekennzeichnet,**
**dass** die dünnen Platten (4) eines oder mehrerer der Halteelemente (2) aus Glas oder Glaskeramik bestehen.

3. Trägersystem nach Anspruch 1 oder 2,
**dadurch gekennzeichnet,**
**dass** die Grundplatte (1) aus Glas oder Glaskeramik besteht.

4. Trägersystem nach Anspruch 1 oder 2,
**dadurch gekennzeichnet,**
**dass** auch die Grundplatte (1) aus dünnen gestapelten Platten (3) aufgebaut ist, die eine Plattendicke von weniger als 1 mm aufweisen.

5. Trägersystem nach Anspruch 4,
**dadurch gekennzeichnet,**
**dass** die dünnen Platten (3) der Grundplatte (1) aus Glas oder Glaskeramik bestehen.

6. Trägersystem nach einem der Ansprüche 1 bis 5,
**dadurch gekennzeichnet,**
**dass** die dünnen Platten (3, 4) der Grundplatte (1) und/oder eines oder mehrerer der Halteelemente (2) über Verbindungselemente (5) klebefrei durch Form- oder Kraftschluss verbunden sind.

7. Trägersystem nach einem der Ansprüche 1 bis 5, **dadurch gekennzeichnet,**
**dass** die dünnen Platten (3, 4) der Grundplatte (1) und/oder eines oder mehrerer der Halteelemente (2) durch eine Bondtechnik verbunden sind.

8. Trägersystem nach einem der Ansprüche 1 bis 7, **dadurch gekennzeichnet,**
**dass** eine oder mehrere der dünnen Platten (3, 4) der Grundplatte (1) und/oder eines oder mehrerer der Halteelemente (2) so strukturiert sind, dass sie eine oder mehrere Durchgangsöffnungen aufweisen.

9. Trägersystem nach einem der Ansprüche 1 bis 8, **dadurch gekennzeichnet,**
**dass** zumindest zwei der dünnen Platten (3, 4) der Grundplatte (1) und/oder wenigstens eines der Halteelemente (2) unterschiedliche äußere Formen aufweisen.

10. Trägersystem nach einem der Ansprüche 1 bis 9, **dadurch gekennzeichnet,**
**dass** zumindest einige der dünnen Platten (3, 4) der Grundplatte (1) und/oder eines oder mehrerer der Halteelemente (2) eine oder mehrere Durchgangsöffnungen zur Aufnahme einer oder mehrerer Rotationsachsen (8) oder anderer langgestreckter Körper aufweisen.

11. Trägersystem nach einem der Ansprüche 1 bis 10, **dadurch gekennzeichnet,**
**dass** bei einem oder mehreren der Halteelemente (2) die gestapelten dünnen Platten (4) vertikal zur Oberfläche der Grundplatte (1) ausgerichtet sind.

## Claims

1. A carrier system for functional elements (6) in microtechnology comprising a base plate (1) and, fixed on the base plate (1), one or more holding elements (2) for the functional elements (6),
wherein the holding elements (2) are partially or completely made of thin, stacked plates (4) having a plate thickness of less than 1 mm,
and the thin plates of the holding elements have lateral dimensions of which at least one, namely the length or the width, is less than 50% of the length or the width of the base plate,
**characterised in that**
the holding elements comprise holding structures which through external shaping are adapted to a universal gripping tool in an assembly machine, and **in that** the base plate comprises connection interfaces for inlet lines in the form of detachable vacuum connections for vacuum-supported building processes during the fixation of the holding elements.

2. The carrier system according to claim 1,
**characterised in that**
the thin plates (4) of one or more of the holding elements (2) are made of glass or glass ceramic.

3. The carrier system according to claim 1,
**characterised in that**
the base plate (1) is made of glass or glass ceramic.

4. The carrier system according to claim 1 or 2,
**characterised in that**
the base plate (1) is also built up of thin, stacked plates (3) which have a plate thickness of less than 1 mm.

5. The carrier system according to claim 4,
**characterised in that**
the thin plates (3) of the base plate (1) are made of glass or glass ceramic.

6. The carrier system according to any one of claims 1 to 5,
**characterised in that**
the thin plates (3, 4) of the base plate (1) and/or of one or more of the holding elements (2) are positively or non-positively connected to each without adhesive via connection elements (5).

7. The carrier system according to any one of claims 1 to 5,
**characterised in that**
the thin plates (3, 4) of the base plate (1) and/or of one or more of the holding elements (2) are connected by means of a bonding technique.

8. The carrier system according to any one of claims 1 to 7,
**characterised in that**
one or more of the thin plates (3, 4) of the base plate (1) and/or of one or more of the holding elements (2) is/are structured in such a way that it/they has/have one or more apertures.

9. The carrier system according to any one of claims 1 to 8,
**characterised in that**
at least two of the thin plates (3, 4) of the base plate (1) and/or at least one of the holding elements (2) have different external shapes.

10. The carrier system according to any one of claims 1 to 9,
**characterised in that**
at least some of the thin plates (3, 4) of the base plate (1) and/or of one or more of the holding elements (2) have one or more apertures for receiving one or more axes of rotation (8) or other elongated bodies.

11. The carrier system according to any one of claims 1 to 10,
**characterised in that**
in one or more of the holding elements (2) the stacked thin plates (4) are aligned vertically to the surface of the base plate (1).

## Revendications

1. Système de support pour éléments fonctionnels (6) de la micro-technologie, lequel présente une plaque de base (1) et un ou plusieurs éléments de retenue (2) fixé (s) sur la plaque de base (1) pour les éléments fonctionnels (6),
dans lequel les éléments de retenue (2) sont partiellement ou entièrement constitués de plaques minces empilées (4) qui présentent une épaisseur de plaque de moins de 1 mm,
et les plaques minces des éléments de retenue présentent des dimensions latérales dont au moins une, à savoir la longueur ou la largeur, est inférieure à 50% de la longueur ou largeur de la plaque de base,
**caractérisé en ce**
**que** les éléments de retenue présentent des structures de retenue, lesquelles sont adaptées par façonnage extérieur à un outil de préhension universel dans un automate d'assemblage, et
**que** la plaque de base présente des interfaces de jonction pour des conduites d'alimentation sous la forme de raccords pour vide détachables pour des processus de montage assistés par vide lors de la fixation des éléments de retenue.

2. Système de support selon la revendication 1,
**caractérisé en ce**
**que** les plaques minces (4) d'un ou plusieurs des éléments de retenue (2) se composent de verre ou de vitrocéramique.

3. Système de support selon la revendication 1 ou 2,
**caractérisé en ce**
**que** la plaque de base (1) se compose de verre ou de vitrocéramique.

4. Système de support selon la revendication 1 ou 2,
**caractérisé en ce**
**qu'**également la plaque de base (1) est constituée par des plaques minces empilées (3) qui présentent une épaisseur de plaque de moins de 1 mm.

5. Système de support selon la revendication 4,
**caractérisé en ce**
**que** les plaques minces (3) de la plaque de base (1) se composent de verre ou de vitrocéramique.

6. Système de support selon l'une des revendications 1 à 5,
**caractérisé en ce**
**que** les plaques minces (3, 4) de la plaque de base (1) et/ou d'un ou plusieurs des éléments de retenue (2) sont reliées sans adhésif via des éléments de liaison (5) par fermeture géométrique ou par adhérence.

7. Système de support selon l'une des revendications 1 à 5,
**caractérisé en ce**
**que** les plaques minces (3, 4) de la plaque de base (1) et/ou d'un ou plusieurs des éléments de retenue (2) sont reliées par une technique de liaison.

8. Système de support selon l'une des revendications 1 à 7,
**caractérisé en ce qu'**
une ou plusieurs des plaques minces (3, 4) de la plaque de base (1) et/ou d'un ou plusieurs des éléments de retenue (2) sont structurées d'une façon telle, qu'elles présentent une ou plusieurs ouvertures de traversée.

9. Système de support selon l'une des revendications 1 à 8,
**caractérisé en ce qu'**
au moins deux des plaques minces (3, 4) de la plaque de base (1) et/ou d'au moins l'un des éléments de retenue (2) présentent des formes extérieures différentes.

10. Système de support selon l'une des revendications 1 à 9,
**caractérisé en ce qu'**
au moins certaines des plaques minces (3, 4) de la plaque de base (1) et/ou d'un ou plusieurs des éléments de retenue (2) présentent une ou plusieurs ouvertures de traversée pour la réception d'un ou plusieurs axes de rotation (8) ou d'autres corps allongés.

11. Système de support selon l'une des revendications 1 à 10,
**caractérisé en ce qu'**
au niveau d'un ou plusieurs des éléments de retenue (2), les plaques minces empilées (4) sont orientées verticalement à la surface de la plaque de base (1).
